# EUROPÄISCHE PATENTSCHRIFT

(11) **EP 2 479 020 B1**
(45) Veröffentlichungstag und Bekanntmachung des Hinweises auf die Patenterteilung: **16.01.2013**
(21) Anmeldenummer: 11152054.0
(22) Anmeldetag: 25.01.2011
(51) Int. Cl.: B29C 49/48

(54) **Integriertes Blasform-Pressverfahren und Formwerkzeug hierfür**
Integrated blow moulding pressing method and moulding tool therefor
Procédé de moulage par soufflage intégré et outil de formage associé

(43) Veröffentlichungstag der Anmeldung: 25.07.2012
(73) Patentinhaber: Röchling Automotive AG & Co. KG, 68165 Mannheim (DE)
(72) Erfinder: Nussbaumer, Markus, 39040 Auer (DE)
(74) Vertreter: Trossin, Hans-Jürgen

(56) Entgegenhaltungen:
- EP-A2- 1 693 240
- WO-A2-2007/063155
- DE-A1- 19 637 925
- GB-A- 2 014 504
- JP-A- 7 251 440
- US-A- 3 983 199

## Beschreibung

Die vorliegende Erfindung betrifft ein Integriertes Blasform-Pressverfahren zur Bildung eines einstückigen Kunststoffbauteils mit einem hohlen ersten Bauteilabschnitt und mit einem integral mit diesem ausgebildeten, vorzugsweise massiven, zweiten Bauteilabschnitt gemäß dem Oberbegriff von Anspruch 1. Ein solches Verfahren umfasst u.a. die folgenden Schritte:
- Ausbilden eines Külbels als Blasform-Rohling,
- Einbringen des Külbels in ein Formwerkzeug, wobei das Formwerkzeug eine Formkavität mit einem ersten Formkavitätsabschnitt zur Ausbildung des ersten Bauteilabschnitts und einen mit dem ersten Formkavitätsabschnitt zusammenhängenden zweiten Formkavitätsabschnitt zur Ausbildung des zweiten Bauteilabschnitts aufweist,
- Schließen des Formwerkzeugs,
- Blasformen des hohlen ersten Bauteilabschnitts,
- Bewegen eines Presswerkzeugs im Formwerkzeug relativ zu einem Formteil des Formwerkzeugs zur pressenden Formgebung des zweiten Bauteilabschnitts,
- Entformen des Bauteils umfassend den ersten und den zweiten Bauteilabschnitt.

Ein gattungsgemäßes Verfahren ist aus der GB 2 014 504 A bekannt.

Ein Verfahren mit obigen Verfahrensschritten ist aus der DE 10 2006 060 144 A1 bekannt.

Diese Druckschrift beschreibt ein Verfahren zur Herstellung eines Hauptrohrs als einem ersten Bauteilabschnitt eines einstückigen Kunststoffbauteils, von welchem orthogonal zur Hauptrohrachse verlaufende Rohrstutzen abstehen, von denen wiederum unmittelbar benachbarte Rohrstutzen durch einen ebenen, orthogonal von der Rohrwand abstehenden Steg verbunden sind. Rohrstutzen und Stege bilden einen zweiten Bauteilabschnitt im Sinne der vorliegenden Anmeldung.

Bei dem bekannten Verfahren wird zunächst ein Külbel aus thermoplastischem Kunststoff in eine Blasform eines Formwerkzeugs eingebracht, woraufhin als Zwischenbauteil ein Rohr mit einer radialen Ausbeulung durch Blasformen ausgeformt wird. Dann, wenn der Blasformvorgang abgeschlossen ist und der Werkstoff zur Bildung des Kunststoffbauteils an der Wand der Blasformkavität anliegt, wird mit einem integral im Formwerkzeug vorgesehenen Quetschformwerkzeug die radiale Ausbeulung des blasgeformten Zwischenbauteils durch Relativbewegung von Presswerkzeugteilen des Quetschformwerkzeugs in die oben beschriebenen Stege und Rohrstutzen umgeformt, von welchen die letzteren allerdings endseitig geschlossen sind, da sie aus der in Umfangsrichtung durchgehenden radialen Ausbeulung des blasgeformten Zwischenwerkstücks gebildet sind.

Nach dem Aushärten des so blasgeformten und quetschgeformten Bauteils wird das vom Hauptrohr fern liegende geschlossene Ende der radial vom Hauptrohr abstehenden Rohrstutzen durch ein Messer abgetrennt, wodurch die Rohrstutzen derart geöffnet werden, dass durch sie hindurch das Innere des Hauptrohrs zugänglich ist.

Zwar wird mit diesem kombinierten Blasform- und Quetschformverfahren in vorteilhafter Weise ein einstückiges Kunststoffbauteil mit komplexer Geometrie erhalten, jedoch mit verhältnismäßig langen Taktzeiten, da zuerst der Blasformvorgang abgeschlossen werden muss, bevor die Umformung von Abschnitten des durch Blasformen gebildeten Zwischenwerkstücks mit Pressformwerkzeugen eingeleitet werden kann.

Der Schritt des Blasformgebens gilt dabei im Sinne der vorliegenden Anmeldung als abgeschlossen, wenn trotz Zufuhr von Blasluft in das Külbel keine weitere Formänderung an der Außenwandung des Külbels eintritt, weil das Külbel an der Wand der Formkavität anliegt oder/und weil das Külbelmaterial soweit erstarrt ist, dass es durch Zufuhr von Blasluft zu keiner Formveränderung mehr kommt.

Bei dem aus der gattungsgemäßen GB 2 014 504 A bekannten Verfahren umfasst der Schritt des Einbringens des Külbels in das Formwerkzeug au-βerdem sowohl ein Einbringen eines ersten Külbelabschnitts in den ersten Formkavitätsabschnitt als auch ein Einbringen eines mit dem ersten in Materialzusammenhang stehenden zweiten Külbelabschnitts in den zweiten Formkavitätsabschnitt.

Dadurch, dass das Külbel sowohl in den ersten Formkavitätsabschnitt als auch in den zweiten Formkavitätsabschnitt eingebracht wird, sind im gattungsgemäßen Verfahren des Standes der Technik beide Formkavitätsabschnitte mit umformbarem Kunststoffmaterial bestückt.

In dem aus dem Stand der Technik bekannten Verfahren wird also der zweite Formkavitätsabschnitt, in welchem eine pressende Formgebung durch ein Presswerkzeug erfolgt, nicht erst durch den Blasformvorgang im ersten Formkavitätsabschnitt mit umformbarem Material bestückt, sondern dieser zweite Formkavitätsabschnitt wird bereits beim Einbringen des Külbels in das Formwerkzeug mit umformbarem Kunststoffmaterial bestückt.

Allerdings wird gemäß der GB 2 014 504 A das im zweiten Formkavitätsabschnitt vorhandene Material erst umgeformt, wenn der Blasformvorgang im ersten Formkavitätsabschnitt abgeschlossen ist. Denn die Blasdüse wird durch den zweiten Formkavitätsabschnitt hindurch in den ersten Formkavitätsabschnitt eingeführt. Da das Pressumformen des Materials im zweiten Formkavitätsabschnitt lediglich dem dichten Verschließen des blasgeformten Gefäßes im ersten Formkavitätsabschnitt dient, kann mit dem Pressen erst nach vollständigem Rückzug der Blasdüse begonnen werden.

Es ist daher Aufgabe, das eingangs genannte Verfahren derart zu verbessern, dass es mit höherer Produktivität ausgeführt werden kann.

Diese Aufgabe wird erfindungsgemäß gelöst durch ein gattungsgemäßes Verfahren mit allen Merkmalen des Anspruchs 1.

Dementsprechend kann die Taktzeit des erfindungsgemäßen integrierten Blasform-Pressverfahrens verglichen mit jenem aus dem Stand der Technik Bekannten dadurch verkürzt werden, dass ein Schritt eines Umformens des ersten Külbelabschnitts in dem ersten Formkavitätsabschnitt durch Blasformen und ein Schritt eines Umformens des zweiten Külbelabschnitts in dem zweiten Formkavitätsabschnitt durch Pressen mit dem bewegten Presswerkzeug sich zeitlich überlappen, also das eine Verfahren beginnt, bevor das jeweils andere endet. Der Grad an zeltlicher Überlappung stellt dabei gegenüber dem aus dem Stand der Technik bekannten Verfahren mit sequentiellen Umformschritten die erreichte Taktzeitverkürzung dar.

Wenn gewünscht ist, dass der Umformung von Material im zweiten Formkavitätsabschnitt durch Pressen eine gewisse Gegenkraft im Bereich des Übergangs vom ersten Formkavitätsabschnitt zum zweiten Formkavitätsabschnitt entgegengesetzt wird, kann daran gedacht sein, dass der Schritt des Umformens des ersten Külbelabschnitts in dem ersten Formkavitätsabschnitt durch Blasformen beginnt, bevor der Schritt des Umformens des zweiten Külbelabschnitts in dem zweiten Formkavitätsabschnitt durch Pressen mit dem bewegten Presswerkzeug beginnt. Damit wirkt dem vom Presswerkzeug im zweiten Formkavitätsabschnitt erzeugten Pressdruck wenigstens der Blasluftdruck im ersten Formkavitätsabschnitt entgegen.

Wenn dagegen gewünscht ist, dass dem ersten Formkavitätsabschnitt, also dem Blasform-Kavitätsabschnitt, Material aus dem zweiten Formkavitätsabschnitt, also aus dem Pressform-Kavitätsabschnitt, zugeführt werden soll, kann dies dadurch geschehen, dass alternativ zur vorherigen Arbeitsreihenfolge der Schritt des Umformens des zweiten Külbelabschnitts in dem zweiten Formkavitätsabschnitt durch Pressen mit dem bewegten Presswerkzeug beginnt, bevor der Schritt des Umformens des ersten Külbelabschnitts in dem ersten Formkavitätsabschnitt durch Blasformen beginnt. Somit wirkt zunächst nur der Pressdruck auf das umformbare Material im zweiten Formkavitätsabschnitt, wodurch dieses in den mit dem zweiten Formkavitätsabschnitt kontinuierlich zusammenhängenden ersten Formkavitätsabschnitt eingedrückt werden kann, aber nicht muss.

Als Beginn des Umformens durch Blasformen soll im Sinne der vorliegenden Anmeldung der Beginn des Einleitens von Blasluft in das Külbel gelten. Als Beginn des Umformens durch Pressen soll im Sinne der vorliegenden Anmeldung der Beginn einer Relativbewegung des Presswerkzeugs relativ zu ruhenden Formwerkzeugteilen angesehen werden.

Insbesondere dann, wenn der zweite Bauteilabschnitt ein massiver Bauteilabschnitt ist, während der erste Bauteilabschnitt ein verglichen mit dem massiven zweiten Bauteilabschnitt dünnwandiger Hohlkörper ist, kann es im Übergangsbereich zwischen erstem und zweitem Bauteilabschnitt aufgrund der abrupten Dickenänderung der Bauteildicke zu unerwünschten Schwindungserscheinungen im Material kommen. Diese können beispielsweise dadurch gemildert oder sogar vermieden werden, dass der Schritt des Umformens des ersten Külbelabschnitts in dem ersten Formkavitätsabschnitt durch Blasformen endet, bevor der Schritt des Umformens des zweiten Külbelabschnitts in dem zweiten Formkavitätsabschnitt durch Pressen mit dem bewegten Presswerkzeug endet. In diesem Falle kann schwindendes Material durch das Presswerkzeug zum blasgeformten Bauteilabschnitt hin nachgedrückt werden, so dass durch Schwindung möglicherweise zu befürchtende Mulden in einem Oberflächenabschnitt des Kunststoffbauteils in ihrer Tiefenausdehnung verringert oder gar ganz vermieden werden können.

Dann, wenn der Umformgrad des zweiten Bauteilabschnitts deutlich geringer ist als der Umformgrad des ersten Bauteilabschnitts - etwa, weil der zweite Bauteilabschnitt ein deutlich geringeres Volumen als der erste Bauteilabschnitt aufweist und nahezu mit endgültiger Endkontur bereits beim Schließen des Formwerkzeugs vorliegt, kann daran gedacht sein, dass der Schritt des Umformens des zweiten Külbelabschnitts in dem zweiten Formkavitätsabschnitt durch Pressen mit dem bewegten Presswerkzeug endet, bevor der Schritt des Umformens des ersten Külbelabschnitts in dem ersten Formkavitätsabschnitt durch Blasformen endet.

Wie eingangs dargelegt wurde, ist der erste Bauteilabschnitt des mit dem vorliegenden erfindungsgemäßen Verfahren erzeugten Kunststoffbauteils ein hohler Bauteilabschnitt, vorzugsweise ein Rohr oder dergleichen, wobei das Rohr aufgrund der beim Blasformen zu beachtenden Randbedingungen erst nach dem Entformen aus dem Formwerkzeug endseitig geöffnet werden kann. Ebenso bevorzugt ist der zweite Bauteilabschnitt ein massiver Befestigungsansatz oder Befestigungsvorsprung, welcher von der Rohraußenwand absteht und welcher der Befestigung des Rohrs an einer Tragstruktur, etwa einem Kraftfahrzeugrahmen, einer Kraftfahrzeugkarosserie, einem Kraftfahrzeugaggregat, wie beispielsweise Verbrennungsmotor und dergleichen, dient. In diesem Falle ist es nicht ungewöhnlich, wenn das Bauteilvolumen des hohlen ersten Bauteilabschnitts mehr als das Zehnfache, vorzugsweise mehr als das Fünfzehnfache, des Bauteilvolumens des zweiten Bauteilabschnitts umfasst. Derartige Bauteile, die bisher in mehrstufigen Fertigungsverfahren unter Anwendung von Fügeverfahren zur Vereinigung gesondert vorliegender Bauteilabschnitte herstellbar waren, können mit dem erfindungsgemäßen Verfahren einstückig und damit mit hoher Festigkeit in im Wesentlichen einem Verfahrensschritt hergestellt werden, an dem sich dann lediglich die für einen Blasformgebungsprozess üblichen Nachbearbeitungsschritte anschließen.

Insbesondere dann, wenn der zweite Bauteilabschnitt massiv ausgeführt sein soll, kann es vorteilhaft sein, dass das Verfahren ein Quetschen des Külbels zwischen dem ersten Külbelabschnitt und dem zweiten Külbelabschnitt derart umfasst, dass das Külbel in dem Quetschabschnitt einen massiven, also nicht hohlen, Querschnitt aufweist. In diesem Fall kann während des Schritts des Blasformens des ersten Bauteilabschnitts Blasluft nicht in den Bereich des zweiten Bauteilabschnitts überströmen, da der Quetschabschnitt eine Gasströmungsblockade bildet. Somit kann sichergestellt werden, dass zumindest die Blasformgebung im ersten Formkavitätsabschnitt keine oder nur geringe Auswirkungen auf den zweiten Formkavitätsabschnitt, also dem zweiten Bauteilabschnitt, hat.

Grundsätzlich ist denkbar, dass das Quetschen des Külbels zwischen dem ersten Külbelabschnitt und dem zweiten Külbelabschnitt, also zwischen dem ersten Formkavitätsabschnitt und dem zweiten Formkavitätsabschnitt, durch ein gesondertes, relativ zu anderen Formwerkzeugteilen bewegliches Quetschwerkzeug realisiert wird.

Konstruktiv wesentlich einfacher erfolgt das Quetschen an der genannten Stelle vorteilhaft beim oben erwähnten Schritt des Schließens des Formwerkzeugs. In diesem Falle reicht es aus, die Formkavität in einem Übergangsbereich zwischen erstem Formkavitätsabschnitt und zweitem Formkavitätsabschnitt in der relevanten Raumrichtung so dünn auszubilden, dass ein zu Beginn des Einbringvorgangs des Külbels in das Formwerkzeug hohles Külbel beim Schließen des Formwerkzeugs in dem genannten Bereich zu einem massiven Abschnitt zusammengepresst wird.

Zur Realisierung eines aus dem Stand der Technik bereits bekannten Verfahrens offenbaren die eingangs genannten GB 2 014 504 A und DE 10 2006 060 144 A1 ein Formwerkzeug zur Herstellung eines einstückigen Kunststoffbauteils mit einem hohlen ersten Bauteilabschnitt und mit einem integral mit diesem ausgebildeten massiven zweiten Bauteilabschnitt, wobei in dem Formwerkzeug eine Formkavität mit einem ersten Formkavitätsabschnitt zur Ausbildung des ersten Bauteilabschnitts und mit einem mit dem ersten Formkavitätsabschnitt zusammenhängenden zweiten Formkavitätsabschnitt zur Ausbildung des zweiten Bauteilabschnitts ausgebildet ist, und wobei das Formwerkzeug wenigstens drei relativ zueinander bewegliche Formwerkzeugteile umfasst, nämlich eine erste Formwerkzeughälfte und eine zweite Formwerkzeughälfte mit je einer Formkavitätshälfte, von welche jede wiederum einen ersten Formkavitätshälftenabschnitt und einen mit diesem zusammenhängenden zweiten Formkavitätshälftenabschnitt aufweist, sowie einen relativ zu den Formwerkzeughälften beweglichen Pressstempel, welcher wenigstens eine bewegliche Begrenzungswand des zweiten Formkavitätsabschnitts bildet.

Das aus der GB 2 014 504 A bekannte Formwerkzeug ist darüber hinaus derart weitergebildet, dass zwischen dem ersten und dem zweiten Formkavitätsabschnitt eine Engstelle der Formkavität vorgesehen ist, sowie dadurch, dass der zweite Formkavitätsabschnitt in einer Abstehrichtung vom ersten Formkavitätsabschnitt absteht und ein zur Abstehrichtung orthogonaler Querschnitt der Formkavität zu beiden Seiten der Engstelle einen größeren Flächeninhalt aufweist als in der Engstelle.

Die eingangs genannte Aufgabe wird außerdem gelöst durch ein aus der GB 2 014 504 A bekanntes gattungsgemäßes Formwerkzeug mit allen Merkmalen des Anspruchs 7.

Mit der oben genannten Engstelle kann der zuvor geschilderte Quetschvorgang am Külbel zwischen dem ersten Külbelabschnitt und dem zweiten Külbelabschnitt beim Schließen der Form ohne weitere Handlungen erfolgen. Die Engstelle hat hierzu lediglich in Abstimmung mit dem jeweils verwendeten Külbel derart dimensioniert zu sein, dass das ursprünglich hohle Külbel an der Engstelle zu einem massiven Bauteilabschnitt komprimiert werden kann. Mit einer derartigen Dimensionierungsaufgabe wird der Fachmann jedoch keinerlei Probleme haben.

Abgesehen von der genannten Engstelle in der Formkavität, welche in der vorliegenden Erfindung der funktionalen Trennung der in den beiden Formkativätsabschnitt ausgeführten unterschiedlichen Umformverfahren dient - die Engstelle kann für das durch das Presswerkzeug zum Strömen veranlasste umformbare Kunststoffmaterial als Drossel und somit als Strömungswiderstand gegen eine zu starke Rückströmung von Kunststoffmaterial in die Blasformkavität dienen - können vor und hinter der Engstelle nahezu beliebig große Bauteilquerschnitte realisierbar sein.

Mit dem hier beschriebenen erfindungsgemäßen Verfahren, vorzugsweise unter Verwendung des zuvor beschriebenen erfindungsgemäßen Formwerkzeugs, kann ein höchst vorteilhaftes Kunststoffbauteil , das zur Erfindung nicht gehört, hergestellt werden, welches einen sich längs einer ersten Bauteilabschnittsachse erstreckenden hohlen ersten Bauteilabschnitt aufweist und welches einen davon in einer Abstehrichtung abstehenden, vorzugsweise massiven, längs einer von der ersten Bauteilabschnittsachse verschiedenen zweiten Bauteilabschnittsachse erstreckenden zweiten Bauteilabschnitt aufweist. An dem durch das oben beschriebene Verfahren, vorzugsweise unter Verwendung des oben beschriebenen vorteilhaften Formwerkzeugs, hergestellten Kunststoffbauteil ist der zweite Bauteilabschnitt verbindungsnahtfrei, weil ohne gesonderten Fügevorgang, integral mit dem ersten Bauteilabschnitt ausgebildet. Erfindungsgemäß weist das Kunststoffbauteil zwischen erstem und zweitem Bauteilabschnitt eine Engstelle auf.

Die oben zum Kunststoffbauteil gemachten Ausführungen und vorteilhaften Ausbildungen sind als vorteilhafte Weiterbildungen des gerade dargelegten allgemeinen Kunststoffbauteils anzusehen. Hierzu zählt auch, dass die Querschnittsfläche eines zur Abstehrichtung orthogonalen Querschnitts des zweiten Bauteilabschnitts und des ersten Bauteilabschnitts jeweils ausgehend von einem die Engstelle aufweisenden Verbindungsabschnitt, in welchem der erste und der zweite Bauteilabschnitt miteinander verbunden sind, von diesem Verbindungsabschnitt weg größer werden.

Nachzutragen ist, dass die in der vorliegenden Anmeldung genannten Hälften, wie etwa "Formwerkzeughälfte" oder "Formkavitätshälfte" nicht als exakte mathematische Hälfte im Sinne von 50 % eines Ganzen zu verstehen sind. Vielmehr sind diese "Hälften" als Teile des Ganzen zu verstehen, wobei der jeweilige Anteil einer Formwerkzeughälfte oder einer Formkavitätshälfte am gesamten Formwerkzeug bzw. an der gesamten Formkavität durchaus von 50 % verschieden sein kann, mitunter auch erheblich verschieden sein kann.

Weiter soll von der vorliegenden Anmeldung nicht ausgeschlossen sein, dass die oben genannten "Hälften" selbst wiederum aus mehreren Teilen bestehen können, so dass eine oder mehrere Formwerkzeughälften aus mehreren Unterbauteilen zusammengesetzt sein können, welcher erst gemeinsam die der jeweiligen Formwerkzeughälfte zugeordnete Formkativätshälfte bilden.

Nachfolgend wird die vorliegende Erfindung anhand der beiliegenden Figuren näher erläutert. Es stellt dar:
- Figur 1:: Eine Querschnittsdarstellung durch ein erfindungsgemäßes Formwerkzeug mit einem darin fertiggestellten Bauteil,

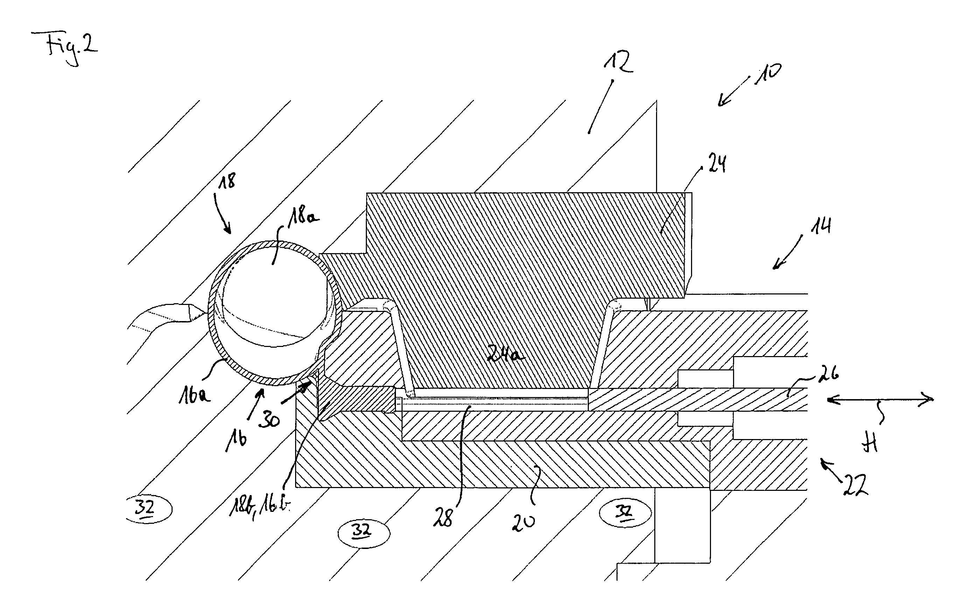

- Figur 2:: Einen vergrößerten Ausschnitt der Darstellung von Figur 1.

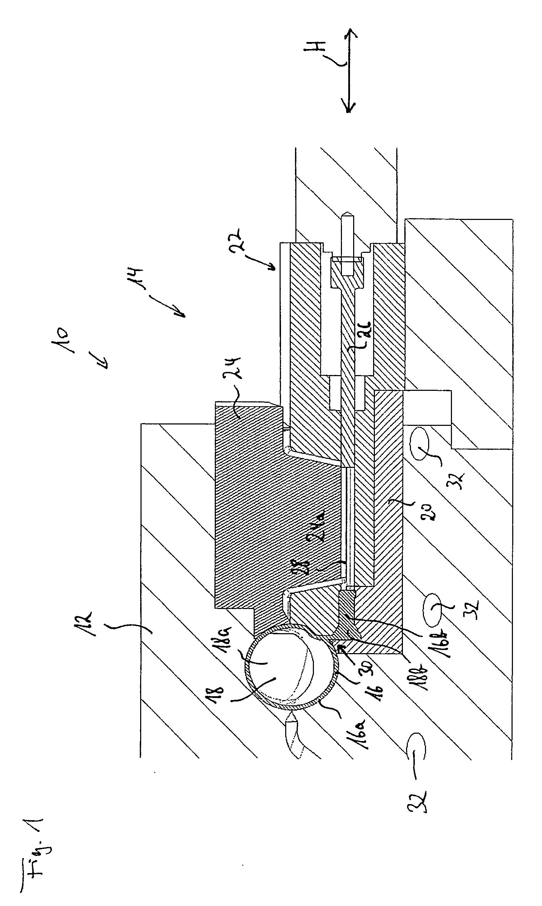

In Figur 1 ist ein erfindungsgemäßes Formwerkzeug allgemein mit 10 bezeichnet. Das Formwerkzeug 10 kann eine im Wesentlichen einteilige erste Werkzeughälfte 12 und eine mehrteilige zweite Werkzeughälfte 14 umfassen. Die zweite Werkzeughälfte 14 kann in Richtung des Doppelpfeils H zur Entformung eines Werkstücks 16 aus der Formkavität 18 aus der ersten Werkzeughälfte 12 herausziehbar und in diese einschiebbar sein.

Die zweite Formwerkzeughälfte 14 kann die Formwerkzeugbauteile 20, 22 und 24 umfassen, wobei letzteres mit einem einstückig daran vorgesehenen konischen Fortsatz 24a aus einer entsprechenden konischen Ausnehmung im Formwerkzeugbauteil 22 herausnehmbar und in dieses einsetzbar sein kann.

Das Formwerkzeugbauteil 22 umfasst einen relativ zu diesem beweglichen Presskolben 26, welcher in Richtung des Doppelpfeils H relativ zum Formwerkzeugbauteil 22 und zum Formwerkzeugbauteil 24, die zusammen mit dem Formwerkzeugbauteil 20 einen Bewegungskanal 28 für den Presskolben 26 in der zweiten Formwerkzeughälfte 14 definieren können, beweglich sein kann.

Die Formkavität 18 weist einen ersten Formkativätsabschnitt 18a auf, in welchem ein hohler erster Bauteilabschnitt 16a, hier in Form eines sich im Wesentlichen orthogonal zur Zeichenebene erstreckenden rohrförmigen Bauteilabschnitts, durch Blasformen ausgebildet wird.

Die Formkavität 18 weist weiter einen zweiten Formkavitätsabschnitt 18b auf, in welchem ein einstückig mit dem ersten, hohlen Bauteilabschnitt 16a ausgebildeter Befestigungsabschnitt 16b durch Pressen mit dem Pressstempel 26 erzeugt wird, welcher sich im dargestellten Beispiel im Wesentlichen in der Zeichenebene erstreckt.

Der zweite Formkavitätsabschnitt 18b kann, wie im vorliegenden Beispiel dargestellt, vollständig in einer, hier in der zweiten, Formwerkzeughälfte 14 ausgebildet sein.

Der Bauteilabschnitt 16b ist vorzugsweise massiv ausgebildet, damit er, wie im Ausführungsbeispiel beispielhaft dargestellt, als stabiles Befestigungselement zur Befestigung des rohrförmigen ersten Bauteilabschnitts 16a dienen kann.

Da die beiden Bauteilabschnitte 16a und 16b aus demselben Külbel hervorgehen, sind diese Bauteilabschnitte von Anfang an integral ohne jegliches Fügeverfahren miteinander verbunden.

Am Übergang zwischen dem ersten Formkativätsabschnitt 18a und dem zweiten Formkativätsabschnitt 18b weist die Formkavität 18 eine Engstelle 30 auf, welche wenigstens beim Schließen des Formwerkzeugs 10 nach Einlegen des Külbels das umformbare Material in der Formkavität 18 vorzugsweise derart quetscht, dass es zumindest in der Engstelle 30 als massives, hohlraumfreies Material vorliegt. Dadurch kann zum einen verhindert werden, dass Blasluft aus dem ersten Formkativätsabschnitt 18a, in welchem der erste Bauteilabschnitt 16a durch Blasformen gebildet wird, in den zweiten Formkativätsabschnitt 18b gelangt und dort den Pressvorgang durch den Presstempel 26 stört.

Umgekehrt kann die Engstelle 30 auch als Drossel für flüssiges oder zumindest fließfähiges umformbares Material im zweiten Formkavitätsabschnitt 18b dienen, so dass aufgrund des durch die Engstelle 30 erhöhten Strömungswiderstandes kein oder nur sehr wenig Material durch den Presstempel 26 aus dem zweiten Formkativätsabschnitt 18b in den ersten Formkativätsabschnitt 18a gedrückt wird.

Die Engstelle 30 kann somit zur Sicherstellung einer Funktionstrennung zwischen dem Blasformverfahren im ersten Formkativätsabschnitt 18a und dem Pressverfahren im zweiten Formkativätsabschnitt 18b dienen.

In der ersten Formwerkzeughälfte können Kühlkanäle 32 vorgesehen sein. Der Bewegungsantrieb des Presskolbens 26 relativ zu der ihn aufnehmenden zweiten Formwerkzeughälfte 14 kann pneumatisch oder bevorzugt hydraulisch oder nach einem anderen geeigneten Antriebsverfahren ausgebildet sein.

Beim Schließen des Formwerkzeugs 10 kann somit durch die Engstelle 30 das in die Formkavität 18 eingelegte Külbel in einen ersten Külbelabschnitt und in einen zweiten Külbelabschnitt unterteilt werden, wobei die Külbelabschnitte nach wie vor über die Engstelle 30 hinweg integral miteinander verbunden sind.

## Patentansprüche

1. Integriertes Blasform-Pressverfahren zur Bildung eines einstückigen Kunststoffbauteils (16) mit einem hohlen ersten Bauteilabschnitt (16a) und mit einem integral mit diesem ausgebildeten, vorzugsweise massiven, zweiten Bauteilabschnitt (16b), umfassend die folgenden Schritte:
- Ausbilden eines Külbels als Blasform-Rohling,
- Einbringen des Külbels in ein Formwerkzeug (10), wobei das Formwerkzeug (10) eine Formkavität (18) mit einem ersten Formkavitätsabschnitt (18a) zur Ausbildung des ersten Bauteilabschnitts (16a) und einen mit dem ersten Formkavitätsabschnitt (18a) zusammenhängenden zweiten Formkavitätsabschnitt (18b) zur Ausbildung des zweiten Bauteilabschnitts (16b) aufweist,
- Schließen des Formwerkzeugs (10),
- Blasformen des hohlen ersten Bauteilabschnitts (16a),
- Bewegen eines Presswerkzeugs (26) im Formwerkzeug (10) relativ zu einem Formteil (22) des Formwerkzeugs (10) zur pressenden Formgebung des zweiten Bauteilabschnitts (16b),
- Entformen des Bauteils (16) umfassend den ersten (16a) und den zweiten Bauteilabschnitt (16b),
wobei der Schritt des Einbringens des Külbels in das Formwerkzeug (10) sowohl ein Einbringen eines ersten Külbelabschnitts in den ersten Formkavitätsabschnitt (18a) als auch ein Einbringen eines mit dem ersten in Materialzusammenhang stehenden zweiten Külbelabschnitts in den zweiten Formkavitätsabschnitt (18b) aufweist,
**dadurch gekennzeichnet, dass** ein Schritt eines Umformens des ersten Külbelabschnitts in dem ersten Formkavitätsabschnitt (18a) durch Blasformen und ein Schritt eines Umformens des zweiten Külbelabschnitts in dem zweiten Formkavitätsabschnitt (18b) durch Pressen mit dem beweglichen Presswerkzeug (26) sich zeitlich überlappen.

2. Verfahren nach Anspruch 1,
**dadurch gekennzeichnet, dass** der Schritt des Umformens des ersten Külbelabschnitts in dem ersten Formkavitätsabschnitt (18a) durch Blasformen beginnt, bevor der Schritt des Umformens des zweiten Külbelabschnitts in dem zweiten Formkavitätsabschnitt (18b) durch Pressen mit dem beweglichen Presswerkzeug (26) beginnt.

3. Verfahren nach Anspruch 1,
**dadurch gekennzeichnet, dass** der Schritt des Umformens des zweiten Külbelabschnitts in dem zweiten Formkavitätsabschnitt (18b) durch Pressen mit dem beweglichen Presswerkzeug (26) beginnt, bevor der Schritt des Umformens des ersten Külbelabschnitts in dem ersten Formkavitätsabschnitt (18a) durch Blasformen beginnt.

4. Verfahren nach einem der vorhergehenden Ansprüche,
**dadurch gekennzeichnet, dass** der Schritt des Umformens des ersten Külbelabschnitts in dem ersten Formkavitätsabschnitt (18a) durch Blasformen endet, bevor der Schritt des Umformens des zweiten Külbelabschnitts in dem zweiten Formkavitätsabschnitt (18a) durch Pressen mit dem beweglichen Presswerkzeug (26) endet.

5. Verfahren nach einem der Ansprüche 1 bis 3,
**dadurch gekennzeichnet, dass** der Schritt des Umformens des zweiten Külbelabschnitts in dem zweiten Formkavitätsabschnitt (18b) durch Pressen mit dem beweglichen Presswerkzeug (26) endet, bevor der Schritt des Umformens des ersten Külbelabschnitts in dem ersten Formkavitätsabschnitt (18a) durch Blasformen endet.

6. Verfahren nach einem der vorhergehenden Ansprüche,
**dadurch gekennzeichnet, dass** das Verfahren, vorzugsweise der Schritt des Schließens des Formwerkzeugs (10), ein Quetschen des Külbels zwischen dem ersten Külbelabschnitt und dem zweiten Külbelabschnitt derart umfasst, dass das Külbel in dem Quetschabschnitt (bei 30) einen massiven Querschnitt aufweist, so dass während des Schritts des Blasformens des ersten Bauteilabschnitts (16a) ein Überströmen von Blasluft in den Bereich des zweiten Bauteilabschnitts (16b) durch den Quetschabschnitt (bei 30) verhindert ist.

7. Formwerkzeug (10) zur Herstellung eines einstückigen Kunststoffbauteils (16) mit einem hohlen ersten Bauteilabschnitt (16a) und mit einem integral mit diesem ausgebildeten massiven zweiten Bauteilabschnitt (16b), insbesondere zur Durchführung des Verfahrens nach einem der vorhergehenden Ansprüche, wobei in dem Formwerkzeug (10) eine Formkavität (18) mit einem ersten Formkavitätsabschnitt (18a) zur Ausbildung des ersten Bauteilabschnitts (16a) und mit einem mit dem ersten Formkavitätsabschnitt (18a) zusammenhängenden zweiten Formkavitätsabschnitt (18b) zur Ausbildung des zweiten Bauteilabschnitts (16b) ausgebildet ist, und wobei das Formwerkzeug (10) wenigstens drei relativ zueinander bewegliche Formwerkzeugteile (12, 14, 26) umfasst, nämlich eine erste Formwerkzeughälfte (12) und eine zweite Formwerkzeughälfte (14) mit je einer Formkavitätshälfte, von welcher jede wiederum einen ersten Formkavitätshälftenabschnitt und einen mit diesem zusammenhängenden zweiten Formkavitätshälftenabschnitt aufweist, sowie einen relativ zu den Formwerkzeughälften (12, 14) beweglichen Pressstempel (26), welcher wenigstens eine bewegliche Begrenzungswand des zweiten Formkavitätsabschnitts (18b) bildet, wobei zwischen dem ersten (18a) und dem zweiten Formkavitätsabschnitt (18b) eine Engstelle (30) der Formkavität (18) derart vorgesehen ist, dass der zweite Formkavitätsabschnitt (18b) in einer Abstehrichtung (H) vom ersten Formkavitätsabschnitt (18a) absteht und ein zur Abstehrichtung (H) orthogonaler Querschnitt der Formkavität (18) zu beiden Seiten der Engstelle (30) einen größeren Flächeninhalt aufweist als in der Engstelle (30),
**dadurch gekennzeichnet, dass** der Pressstempel (26) in und entgegen der Abstehrichtung (H) relativ zu den Formwerkzeughälften (12, 14) beweglich ist.

## Claims

1. An integrated blow-moulding pressing method for forming a one-piece plastics component (16) having a hollow first component section (16a) and having, formed integrally therewith, a preferably solid second component section (16b), comprising the following steps:
- forming a parison as a blow-moulding blank,
- introducing the parison into a moulding tool (10), wherein the moulding tool (10) has a mould cavity (18) with a first mould cavity section (18a) for forming the first component section (16a) and a second mould cavity section (18b) cohesively connected with the first mould cavity section (18a) for forming the second component section (16b),
- closing the moulding tool (10),
- blow-moulding the hollow first component section (16a),
- moving a pressing tool (26) in the moulding tool (10) relative to a mould part (22) of the moulding tool (10) for the press-shaping of the second component section (16b),
- demoulding the component (16) comprising the first (16a) and the second component section (16b),
wherein the step of introducing the parison into the moulding tool (10) comprises both introducing a first parison section into the first mould cavity section (18a) and introducing a second parison section, which is in cohesive connection with the material of the first parison section, into the second mould cavity section (18b),
**characterised in that** a step of shaping the first parison section in the first mould cavity section (18a) by blow-moulding and a step of shaping the second parison section in the first second mould cavity section (18b) by pressing with the movable pressing tool (26) overlap in time.

2. A method according to Claim 1,
**characterised in that** the step of shaping the first parison section in the first mould cavity section (18a) by blow-moulding begins before the step of shaping the second parison section in the second mould cavity section (18b) by pressing with the movable pressing tool (26).

3. A method according to Claim 1,
**characterised in that** the step of shaping the second parison section in the second mould cavity section (18b) by pressing with the movable pressing tool (26) begins before the step of shaping the first parison section in the first mould cavity section (18a) by blow-moulding.

4. A method according to any one of the preceding Claims,
**characterised in that** the step of shaping the first parison section in the first mould cavity section (18a) by blow-moulding ends before the step of shaping the second parison section in the second mould cavity section (18a) [sic] by pressing with the movable pressing tool (26).

5. A method according to any one of Claims 1 to 3,
**characterised in that** the step of shaping the second parison section in the second mould cavity section (18b) by pressing with the movable pressing tool (26) ends before the step of shaping the first parison section in the first mould cavity section (18a) by blow-moulding.

6. A method according to any one of the preceding Claims,
**characterised in that** the method, preferably the step of closing the mould tool (10), comprises squeezing the parison between the first parison section and the second parison section in such a way that in the squeezed section (at 30) the parison is of solid cross-section so that during the step of blow-moulding the first component section (16a) any overflow of blowing air into the region of the second component section (16b) through the squeezed section (at 30) is prevented.

7. A moulding tool (10) for producing a one-piece plastics component (16) having a hollow first component section (16a) and having, formed integrally therewith, a solid second component section (16b), in particular for carrying out the method according to any one of the preceding Claims, wherein in the moulding tool (10) there is formed a mould cavity (18) with a first mould cavity section (18a) for forming the first component section (16a) and with a second mould cavity section (18b) cohesively connected with the first mould cavity section (18a) for forming the second component section (16b), and wherein the moulding tool (10) comprises at least three moulding tool parts (12,14,26) which can move relative to one another, namely a first moulding tool half (12) and a second moulding tool half (14) with a respective mould cavity half, each of which again has a first mould cavity half section and a second mould cavity half section cohesively connected with therewith, and also a pressing ram (26) which can move relative to the moulding tool halves (12,14) and which forms at least one movable boundary wall of the second mould cavity section (18b), wherein a narrow point (3) of the form cavity (18) is provided between the first (18a) and the second mould cavity section (18b) so that the second mould cavity section (18b) protrudes from the first mould cavity section (18a) in a protruding direction (H) and a cross-section of the mould cavity (18) orthogonal to the protruding direction (H) is of greater surface area on both sides of the narrow point (30) than in the narrow point (30),
**characterised in that** the pressing ram (26) can move in and counter to the protruding direction (H) relative to the moulding tool halves (12, 14).

## Revendications

1. Procédé de moulage par soufflage intégré pour la formation d'un composant en plastique (16) d'une seule pièce avec une première partie de composant creuse (16a) et avec une deuxième partie de composant (16b), de préférence massive, formée intégralement avec celle-ci, comprenant les étapes suivantes:
- former une ébauche comme pièce de départ pour le moulage par soufflage,
- introduire l'ébauche dans un outil de formage (10), dans lequel l'outil de formage (10) présente une cavité de formage (18) avec une première partie de cavité de formage (18a) pour la formation de la première partie de composant (16a) et une deuxième partie de cavité de formage (18b) reliée à la première partie de cavité de formage (18a) pour la formation de la deuxième partie de composant (16b),
- fermer l'outil de formage (10),
- mouler par soufflage la première partie de composant creuse (16a),
- déplacer un outil de pressage (26) dans l'outil de formage (10) par rapport à une partie de formage (22) de l'outil de formage (10) pour le formage sous pression de la deuxième partie de composant (16b),
- démouler le composant (16) comprenant la première (16a) et la deuxième (16b) parties de composant,
dans lequel l'étape d'introduction de l'ébauche dans l'outil de formage (10) présente aussi bien une introduction d'une première partie d'ébauche dans la première partie de cavité de formage (18a) qu'une introduction d'une deuxième partie d'ébauche communicant matériellement avec la première partie d'ébauche dans la deuxième partie de cavité de formage (18b),
**caractérisé en ce qu'**une étape de déformation de la première partie d'ébauche dans la première partie de cavité de formage (18a) par moulage par soufflage et une étape de déformation de la deuxième partie d'ébauche dans la deuxième partie de cavité de formage (18b) par pressage avec l'outil de pressage mobile (26) se chevauchent dans le temps.

2. Procédé selon la revendication 1, **caractérisé en ce que** l'étape de déformation de la première partie d'ébauche dans la première partie de cavité de formage (18a) par moulage par soufflage commence avant que l'étape de déformation de la deuxième partie d'ébauche dans la deuxième partie de cavité de formage (18b) par pressage avec l'outil de pressage mobile (26) commence.

3. Procédé selon la revendication 1, **caractérisé en ce que** l'étape de déformation de la deuxième partie d'ébauche dans la deuxième partie de cavité de formage (18b) par pressage avec l'outil de pressage mobile (26) commence avant que l'étape de déformation de la première partie d'ébauche dans la première partie de cavité de formage (18a) par moulage par soufflage commence.

4. Procédé selon l'une quelconque des revendications précédentes, **caractérisé en ce que** l'étape de déformation de la première partie d'ébauche dans la première partie de cavité de formage (18a) par moulage par soufflage se termine avant que l'étape de déformation de la deuxième partie d'ébauche dans la deuxième partie de cavité de formage (18b) par pressage avec l'outil de pressage mobile (26) se termine.

5. Procédé selon l'une quelconque des revendications 1 à 3, **caractérisé en ce que** l'étape de déformation de la deuxième partie d'ébauche dans la deuxième partie de cavité de formage (18b) par pressage avec l'outil de pressage mobile (26) se termine avant que l'étape de déformation de la première partie d'ébauche dans la première partie de cavité de formage (18a) par moulage par soufflage se termine.

6. Procédé selon l'une quelconque des revendications précédentes, **caractérisé en ce que** le procédé, de préférence l'étape de fermeture de l'outil de formage (10), comprend un serrage de l'ébauche entre la première partie d'ébauche et la deuxième partie d'ébauche, de telle manière que l'ébauche présente dans la partie serrée (en 30) une section transversale massive, de telle manière que, pendant l'étape de moulage par soufflage de la première partie de composant (16a), un débordement d'air de soufflage dans la région de la deuxième partie de composant (16b) soit empêché par la partie serrée (en 30).

7. Outil de formage (10) pour la fabrication d'un composant en plastique (16) d'une seule pièce avec une première partie de composant creuse (16a) et avec une deuxième partie de composant massive (16b) formée intégralement avec celle-ci, en particulier pour la mise en oeuvre du procédé selon l'une quelconque des revendications précédentes, dans lequel une cavité de formage (18) est réalisée dans l'outil de formage (10), avec une première partie de cavité de formage (18a) pour la formation de la première partie de composant (16a) et avec une deuxième partie de cavité de formage (18b) communicant avec la première partie de cavité de formage (18a) pour la formation de la deuxième partie de composant (16b), et dans lequel l'outil de formage (10) comprend au moins trois parties d'outil de formage (12, 14, 26) mobiles l'une par rapport à l'autre, à savoir une première moitié d'outil de formage (12) et une deuxième moitié d'outil de formage (14) avec chacune une moitié de cavité de formage, dont chacune présente de nouveau une première partie de moitié de cavité de formage et une deuxième partie de moitié de cavité de formage communicant avec celle-ci, ainsi qu'un poinçon de presse (26) mobile par rapport aux moitiés de cavité de formage (12, 14), qui forme au moins une paroi de limitation mobile de la deuxième partie de cavité de formage (18b), dans lequel il est prévu entre la première (18a) et la deuxième (18b) parties de cavité de formage un point d'étranglement (30) de la cavité de formage (18), de telle manière que la deuxième partie de cavité de formage (18b) parte de la première partie de cavité de formage (18a) dans une direction d'éloignement (H) et qu'une section transversale de la cavité de formage (18) orthogonale à la direction d'éloignement (H) présente de part et d'autre du point d'étranglement (30) une étendue plus grande que dans le point d'étranglement (30), **caractérisé en ce que** le poinçon de pressage (26) est mobile dans la direction d'éloignement (H) et inversement par rapport aux moitiés d'outil de formage (12, 14).
